# EUROPEAN PATENT SPECIFICATION

(11) **EP 2 292 910 B1**
(45) Date of publication and mention of the grant of the patent: **10.02.2016**
(21) Application number: 09166042.3
(22) Date of filing: 21.07.2009
(51) Int. Cl.: F02C 9/20, F02C 9/54, F04D 27/02

(54) **Method for the control of gas turbine engines**
Verfahren zum Steuern von Gasturbinen
Procédé de contrôle de turbine à gaz

(43) Date of publication of application: 09.03.2011
(73) Proprietor: ALSTOM Technology Ltd, 5400 Baden (CH)
(72) Inventor: Cataldi, Giovanni, 8037 Zürich (CH); Kaufmann, David Nicolai, 5415 Nussbaumen (CH)
(74) Representative: General Electric Technology GmbH

(56) References cited:
- WO-A-90/10148
- US-A- 4 252 498

## Description

### TECHNICAL FIELD

The present invention relates to a method for operating a gas turbine engine system under base-load and/or high part load conditions.

### PRIOR ART

The axial compressors of modem heavy duty gas turbine engines are usually equipped with one or more rows of variable vanes. One known problem with axial flow compressors is so-called stall or surge, which can occur when pressure, velocity and/or rotational speed relationship of the compressor are disturbed or unmatched so that the compressor is operating outside its design characteristics. Stall or surge is a breakdown of the smooth pattern of flow through the compressor into violent turbulence, a stall referring to a breakdown in flow in only some of the stages of a multi-stage compressor and a surge generally referring to a complete breakdown of smooth air flow through the compressor. Variable vanes allow a smooth control of the compressor inlet air mass flow while maintaining high aerodynamic efficiency of the axial compressor and sufficient margin to compressor stall and surge limits.

The variable vanes give a predetermined degree of whirl to the air passing to the rotor blades immediately downstream thereof and ensure that air is delivered to the rotor blades at the correct velocity and angle depending on the various conditions existing in the compressor. The control of the compressor inlet mass flow by varying the angle of variable vanes is used within the engine operation concept as a means of regulating the power output while maintaining both high m_fuel/ m_air ratio (wherein m is mass per unit time) and high turbine inlet air temperature, consequently both a stable combustion and an optimal cycle thermal efficiency also during part load operation.

Most gas turbine engines operate with natural gas or diesel oil as main fuels and are therefore characterized by very small fuel air ratios m_fuel/m_air ratio generally in the range of 1/60 to 1/20. Thus the fuel mass flow is relatively small in comparison to the air mass flow and, for a given value of m_air, the normal variations of the fuel composition (generally +/- 5% in energetic input, and consequently ~ ± 5% in m_fuel) have little impact on the gas turbine cycle pressure ratio, on the turbine inlet and exhaust reduced mass flows, and on the position of the engine operating line within the compressor map.

Mainly for this reason, the currently established methods of control of gas turbine engine systems for base load operation are basically characterized by the definition of a base load variable vanes position, which is achieved and maintained at base load operation and this independently of the particular fuel composition and fuel mass flow. Such base load variable vanes position is typically a fully open position or an almost open position, which allows maximum inlet air mass flow and leads to maximum gas turbine power output, and this control position of the variable vanes typically corresponds to the compressor design condition at which maximum aerodynamic efficiency is achieved.

On the top of the above-mentioned known methods of control of gas turbine engine systems, other limiters or controls can be superimposed for operation at very low or very high ambient temperature.

A maximum pressure limit can be specified for the compressor discharge pressure in order to avoid exceeding the engine casing design limit in case of operation at very low ambient temperature.

A maximum temperature limit can be specified for the compressor discharge temperature in order to avoid exceeding the rotor design limit in case of operation at very high ambient temperature.

In both cases, the compressor variable vanes will be commanded to close in case the limit is exceeded.

In both cases, the limiters act only under extreme conditions, while under normal conditions the cycle pressure ratio is free to vary as a result of fuel composition and fuel mass flow variations.

Several methods have been disclosed for the purpose of surge avoidance, so US 4,252,498 discloses a control system for a multi-stage axial flow compressor of a gas turbine engine. The control system embraces a stage of variable angle guide vanes, a first detector adapted to detect a first pressure in the compressor which is influenced by the vane angular setting, and a second detector adapted to detect a second pressure independent of the vane setting but bearing a functional relationship to the rotational speed of a compressor of the engine. A control unit is adapted to use the pressures detected by the detectors to cause an actuation mechanism to adjust the angular setting of the guide vanes in a predetermined manner dependent upon the ratio of the second pressure to the first pressure.

US 2003/011199 discloses a method for controlling variable inlet and stator vanes of a heavy-duty gas turbine electrical power generator compressor component upon occurrence of power grid under-frequency events. Variable inlet guide vanes and the front four variable stator vanes of the compressor are ganged together by means of a common actuation mechanism. Altering the angle of the ganged vanes changes the overall airflow consumption of the compressor and affects the amount of turbine output power produced. Predetermined operational schedules for varying the angular position of the stator vanes in accordance with compressor speed are defined for both nominal and under-frequency operating conditions to ensure optimum compressor efficiency without violating minimum safe compressor surge margin criteria. During a power grid under-frequency event, the variable stator vanes of the compressor are operated in a manner that provides a smooth transition from the predetermined nominal operational schedule to the predetermined under-frequency operational schedule.

The energy content of the fuel used for the operation of a gas turbine indirectly also influences the compressor conditions. Indeed if a gas turbine is used to burn fuels with low energetic content, the fuel-air ratio starts being higher than in the normal cases such as when natural gas or diesel oil is used. Typical values are m_fuel/m_air > 1/20 or even close to 1. In these cases, variation of the fuel compositions in the order of +/- 5% of the energetic input have a remarkable impact on the gas turbine cycle pressure ratio, on the turbine inlet and exhaust reduced mass flows, and on the position of the engine operating line within the compressor map.

This is also true for fuels with rather high energetic content, but characterized by a variable amount of H₂ and CO. H₂ and CO, respectively, during their combustion generate a very high amount or no amount of water, H₂O, that is in extreme cases with respect to normal hydrocarbons present in the natural gas (like methane CH₄). This has a significant impact on the density of the gases entering the turbine (at a given firing temperature and amount of compressor inlet air) and consequently on the turbine inlet pressure and the cycle pressure ratio.

Several methods are known for the purpose of controlling the energy content of a fuel used in a gas turbine e.g. by mixing a fuel from the main source (usually a low energetic fuel or a fuel with high variations in energetic content) with a correspondingly, usually small portion of a normally more energetic backup fuel with constant energetic level (usually natural gas) so that the final composition is more or less stable in terms of its energetic input. However the means to be provided for such a stabilization of the energy content of the fuel are undesirable as being complicated and costly.

Presently the common approach for handling large fuel composition variations in all known control methods is that of specifying a conservative setting for the base load variable vanes position which is valid and safe for all types of fuels, i.e. normally including the less energetic fuel with highest water content which is generally used for the design. Various problems are associated with this approach, so e.g. that the gas turbine engine is controlled below its real possibilities, resulting in lower power output anytime the fuel composition differs from the extreme one used for design. Another problem is that if the actual fuel composition varies outside the range used for design, the known control systems are not able to detect it automatically, but a detailed analysis is conducted by specialized personnel through gas chromatography, analyzing the actual fuel composition which necessitates the shut down of the gas turbine and a redefinition of variable vanes settings manually.

Document WO 90/10148 discloses a method and a device for controlling the position of variable stator vanes in a gas compressor of an aircraft gas turbine engine to maintain the compressor gas flow and pressure ratio on a preselected operating line. According to this disclosed method the total gas pressures at the compressor inlet and compressor outlet are measured, responsive to the measured inlet and outlet gas pressures a current pressure ratio of the compressor is determined, this current pressure ratio is compared to a desired pressure ratio and the position of the stator vanes is varied in response to the difference between the current and the desired pressure ratios.

### SUMMARY OF THE INVENTION

The present invention relates to a method for operating a gas turbine engine system under baseload and/or high part load conditions, said gas turbine engine system comprising a gas turbine engine with at least one compressor with at least one row of adjustable variable vanes for control of the inlet air mass flow; at least one combustor; and at least one turbine. According to this method, a control system, on the basis of and as a function of at least one measured temperature value (T_{amb}) measured upstream of the compressor or a measurable quantity directly functionally related thereto, controls the position of the variable vanes such that at least one measured pressure value (P_{cd}) varying with the angular position of the variable vanes is at a predefined target pressure which is a function of said first temperature (T_{amb}), wherein said predefined target pressure is a function of a turbine exhaust temperature (Tₑₓ), wherein the turbine exhaust temperature is measured using one or a plurality of measuring points with a corresponding averaging scheme.

The advantage of this measurement is to allow a finer control of the variable vanes position with respect to the turbine exhaust reduced mass flow and with respect to the mach numbers of the exhaust gas flow through the last turbine blade. As depending on the turbine last blade design, it might be advisable to reduce the compressor inlet airflow by closing the variable vanes in order to avoid too high mach numbers. The present invention also increases the lifetime for the last turbine stages and allows operation with an optimal positioning of the engine operating line with the target of avoiding too fast aging of rotor shaft, turbine and other gas turbine components as well as for the equipment like heat recovery steam generator, fuel compressor etc. at the interface of the gas turbine.

The invention provides higher average power output and/or lower costs associated to the optimal sizing of the single gas turbine components in applications with fuel characterized by non-predictable composition variations over time and in particular in applications with blast furnace gas as main fuel or with other fuels characterized by a low average value of the lower heating value or high and variable amount of H₂ and CO in their composition. If the present invention is employed, there is no need for complicated mixing of fuels in order to establish a constant energy content of the fuel. A control of the measured pressure downstream of the row of variable vanes which is essentially independent of the fuel used is possible, if the measured pressure downstream of the row of variable vanes is controlled to a target pressure value based on a temperature upstream of the compressor.

Using the control method according to the present invention, even if the used fuel composition varies outside the range used for design composition for the fuel, this control system will detect it automatically, it will automatically redefine variable vanes setting after analyzing results and no manual redefinition of the variable vanes setting is required after the shutdown of the gas turbine engine. So essentially the control system acts independently of the particular fuel composition but it takes it indirectly into account without necessitating the determination of the fuel composition.

According to a first preferred embodiment of the method according to the invention, the control system, on the basis of and as a function of the at least one measured temperature value (T_{amb}) measured upstream of the compressor or a measurable quantity directly functionally related thereto, as well as a function of a measured speed of rotation of a shaft of a gas turbine engine (typically the common shaft of the turbine and the compressor and optionally of the generator) or a measurable quantity directly functionally related thereto, controls the position of the variable vanes such that at least one measured pressure value varying with the angular position of the variable vanes is at a predefined target pressure which is a function of said first temperature as well as said speed of rotation. Again it was found unexpectedly that if the basis of the target value for the pressure is the measured temperature value upstream of the compressor in combination with the shaft speed of rotation, even less dependence of the operating line on the fuel composition is possible. So the additional measurement of shaft speed allows a finer control of the variable vanes position during periods in which the frequency of the electrical grid is too low or too high in view of optimizing the compressor operating point with respect to stall and surge limits. The present invention is suitable for compressor with different aerodynamic designs as depending on the particular compressor design variable vanes can be kept at constant position or compressor inlet airflow can be reduced during under frequency events in the electrical grid.

Preferably, the control is effected by comparing said measured pressure value with a predefined target pressure, wherein the target pressure is calculated as a function of the measured speed of rotation of the shaft or a measurable quantity directly functionally related thereto, and/or as a function of at least one measured temperature value measured upstream of the compressor or a measurable quantity directly functionally related thereto, and wherein the control generates a command to an actuator for the movement of the variable vanes to increase the inlet air flow to the compressor by opening the variable vanes in case the measured pressure value is less than the predefined target pressure or to decrease the inlet air flow by closing the variable vanes in case the measured pressure value is larger than the predefined target pressure.

The measured temperature value is preferentially measured upstream of the compressor or a measurable quantity directly functionally related thereto is a temperature inside of the gas turbine air intake system, preferably the ambient air temperature or the compressor inlet air temperature.

The measured pressure value varying with the angular position of the variable vanes is preferentially measured inside of the compressor downstream of the first row of variable vanes or downstream of several rows of variable vanes or in a plenum downstream of the compressor or in the combustor upstream of the turbine first blade row or downstream of the turbine.

According to a preferred embodiment, the control is a closed loop control.

Said predefined target pressure can be a function of a second pressure value (e.g. P_{amb}) measured upstream of the compressor or downstream of the turbine outlet, wherein preferably control takes place by controlling the ratio of the measured pressure value (e.g. P_{cd}) with the second pressure value (P_{amb}) to a target pressure ratio. So the first pressure measurement is divided by a second pressure measurement which is lower than first pressure measurement, located upstream of the compressor inlet or downstream of the turbine outlet to obtain a new defined target pressure which is also a function of said first temperature. The new defined target pressure is a function of said first temperature and ratio of first pressure measurement and second pressure measurement for better control of said gas turbine engine system. This extends the operation range with respect to stability of the air compressor in the gas turbine engine, and also higher stability and performance optimization for areas with frequent ambient pressure variations are possible. The installation of second pressure measurement at the inlet of the compressor or at the outlet of the turbine, give focus respectively on the compressor or on the turbine flow stability is also advantageous.

The control can, according to a further embodiment of the invention, be carried out in combination with a control of the fuel mass flow, the latter preferably being based on direct or indirect measurement of the turbine inlet or outlet temperature, limiting the amount of fuel based on predefined target values of turbine inlet or outlet temperature.

### BRIEF DESCRIPTION OF THE DRAWINGS

Preferred embodiments of the invention are described in the following with reference to the drawings. In the drawings,
- Fig. 1: shows a diagram of a gas turbine engine system including a block diagram of the control system;
- Fig. 2: shows an example of target schedule of compressor discharge pressure versus compressor inlet temperature at constant shaft rotational speed;
- Fig. 3: shows in a) the sensitivity of the position of the engine operating line (in the compressor map) with respect to the fuel composition (lower heating value LHV) for a conventional control scheme and in b) for the control according to the invention;
- Fig. 4: shows in a) the sensitivity of the turbine exhaust reduced mass flow with respect to the fuel composition (lower heating value, LHV) for a conventional control scheme and in b) for the control according to the invention;
- Fig. 5: shows in a) the sensitivity of the compressor discharge temperature with respect to the fuel composition (lower heating value, LHV) for a conventional control scheme and in b) for the control according to the invention; and
- Fig. 6: shows in a) the sensitivity of the gas turbine engine power output with respect to the fuel composition (lower heating value, LHV) for a conventional control scheme and in b) for the control according to the invention.

### DESCRIPTION OF PREFERRED EMBODIMENTS

With reference to the attached drawings, a gas turbine engine system 1 and the corresponding control shall be described for operation in multiple applications. The proposed control is able to ensure stable gas turbine operation and optimum performance in form of power output and efficiency in particular under conditions of varying composition and/or energy content of the fuel at both base load and high part load operation.

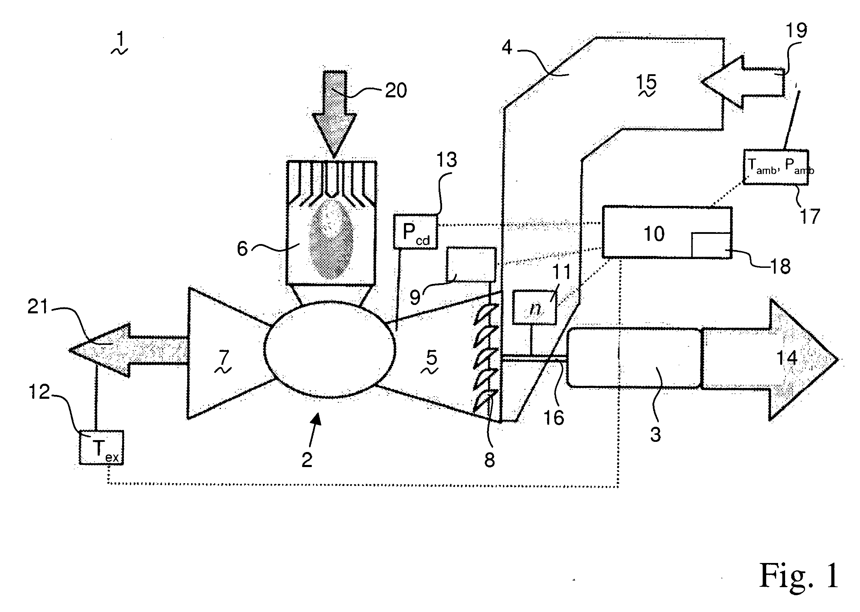

In Fig 1 shows a gas turbine engine system 1 comprising a gas turbine engine 2, an electrical generator 3, an air intake with intake manifold 4, a compressor 5, a combustor 6 and a turbine 7. In Fig 1 the electrical generator 3, compressor 5 and turbine 7 are all three mounted on a single same shaft. The gas turbine engine 2 thus can be a part of a mechanical shaft train, which in its simplest arrangement, also includes an electrical generator and, in more complex arrangement, can also include one or more fuel gas compressors and one or more steam turbines, wherein said electrical generator can be connected to an open or to an isolated electrical grid. The combustor 6 is illustrated as a top-mounted Silo-type combustor, however also different combustor designs are possible in the context of the present invention. The compressor 5 has at least one row of variable vanes 8 to control the inlet airflow. Multiple rows of variable vanes can be present in the compressor 5. One row of variable vanes 8 is located typically upstream of the first row of rotating blades of the compressor 5. The variable vane row 8 is typically provided at the inlet of the compressor 5 or it can be provided inside of compressor 5.

In Fig 1 further an air inlet cooling device 15, like an evaporative cooler, a fogging system or another device, based on water spray, upstream of the compressor inlet is also present. Alternatively or in addition, a cooling device can be located between two consecutive compressor stages or between two consecutive compressors (intercooling). The pre-defined target pressure schedule can be made dependent on whether one or more of such cooling devices are active. Air cooling devices generally lead to a reduction of the compressor discharge temperature. In typical cooling airflow arrangements, the gas turbine engine rotor (rotors) is (are) exposed in its (their) hottest part to the compressor discharge temperature. In those cases where the predefined target pressure schedule (for operation without air inlet cooling) are determined based on rotor temperature limitations, it is generally beneficial (in terms of power output) to specify dedicated higher schedules (more open variable vanes position and higher compressor inlet air flow) for operation with active air inlet cooling.

Fig. 1 also shows a control system 10 for such a gas turbine engine system with pressure measuring devices such as pressure taps 13, temperature measuring devices 17, at least one shaft rotation speed measuring device 11, with at least one actuator 9 for controlling and establishing the position of the variable vanes and at least one closed loop unit 18. The closed loop unit 18 receives input from the measurement devices, in particular from the measurements of the ambient air temperature and pressure (T_{amb}, P_{amb}) 17a, 13a, of the second exhaust gas temperature (Tₑₓ), as well as of the shaft speed (n) and the compressor discharge pressure (P_{cd}). A variety of different mechanical, electrical, hydraulic or pneumatic systems can be used to carry out the function required of the control system 10. By "pressure tap", as this term is used in this specification, is defined as a small hole in the body of pressurized devices used for the connection of pressure sensitive elements or pressure measuring devices for the measurement of pressures.

Using these status measurement values, the closed loop unit 18 controls the position of the variable vanes 8 in the compressor 5 via the actuator unit 9. In order to adjust the angles of the variable vanes 8, normally each row of variable vanes 8 is moved by an actuator 9 which normally includes a lever, a common unison ring, a bell crank lever and a ram. Each variable vane is connected via a lever to the common unison ring. The ring may be moved circumferentially by a bell crank lever, which is actuated by a pneumatic ram.

The control system 10 includes a closed loop unit 18 which generates a control signal for control of the actuator 9 of the variable vanes 8 so as to set their angle. The control is such that the measured compressor discharge pressure (P_{cd}) or another pressure downstream of the variable vanes 8 is controlled to match a target value according to a specified schedule. In this schedule the target value of the compressor discharge pressure (P_{cd}) is determined as a function of the measured inlet temperature (T_{amb}) and of the shaft rotational speed (n). If the measured compressor discharge pressure (P_{cd}) is lower than the defined target value, the variable vanes 8 are commanded to open with respect to the compressor inlet airflow and if it is lower than the defined target value, the variable vanes 8 are commanded to close with respect to the compressor inlet airflow vice versa.

Generally speaking, the pressure measurement devices or pressure taps 13 measure a pressure at a position in the flow path, where the pressure varies as a function of the angular position of the variable vanes 8, so at a position where the local pressure is at least indirectly influenced by this angular position. In the above-mentioned case this pressure used for control of the variable vanes is the compressor discharge pressure (P_{cd}). Also possible is a pressure measurement taking place inside of the compressor 5 downstream of the first row or downstream of a set of rows of variable vanes 8 or a pressure measurement taking place in a plenum downstream of the compressor 5, or in the combustor 6 upstream of the turbine 7 first blade row, and even one located downstream of the turbine 7 outlet.

In addition to that the control may include a second measurement of the pressure of ambient air (P_{amb}), at the air intake manifold 4. So an additional second pressure measuring device (e.g. as part of or parallel to device 17) or pressure tap is possible measuring a pressure which is lower than the compressor discharge pressure (P_{cd}).

The control approach can then also be additionally based on the comparison of the ratio of the first pressure measurement to the second pressure measurement with a newly defined target pressure ratio, rather than simply comparing the first pressure measurement with a predefined target pressure.

One first temperature measurement device 17 measures the temperature T_{amb} at a position upstream of the compressor 5.

A second temperature measurement device 12 measures the turbine exhaust temperature. Further temperature measurement devices are possible, e.g. measuring compressor inlet air temperature or other temperature values inside of the turbine 7 air intake system. The turbine exhaust temperature measurement device 12 may comprise one or more measurement points.

In Fig. 1 a rotor shaft speed measurement device 11 is present, measuring the rotational speed (n) of the compressor or of one of the compressors inside of the gas turbine engine. The predefined pressure target value of the compressor discharge pressure (P_{cd}) is a function not only of the temperature of the air intake, but also of the speed of rotation (n) of the engine. The rotor shaft speed measurement device 11 allows a fine control of the variable vane position also during electrical grid frequency drops and other frequency instabilities, so as to optimize the compressor operating point with respect to stall and surge limits.

All measurement devices are connected to the control system 10 through wiring as shown through dotted lines in Fig 1, however also wireless transmission of the measurement and/or control signals is possible.

During operation, ambient air enters the air intake manifold 4 is guided thereby to the compressor 5, and crosses the variable vanes 8 at the entry of the compressor 5 and before entering the rotating blade rows of the compressor. The air is compressed in the compressor and enters the combustor 6, where it is mixed with fuel and the combustion takes place. The exhaust gas produced by the combustor 6, enters the turbine 7 at high pressure and high temperature, is expanded in the turbine 7, and finally leaves the turbine 7 through exhaust, downstream of which a heat recovery steam generation system may be located.

A target schedule of compressor discharge pressure (P_{cd}) or another pressure downstream of the variable vanes 8 depending on inlet temperature and shaft rotational speed is implemented in the closed loop unit 18 for operation of the unit at base load and high part load operation of the gas turbine engine 2.

The command to the variable vanes actuators is properly filtered to ensure smooth operation and controllability.

The target schedule is specified so to take into account the operational limits of the gas turbine components e.g.: turbine outlet flow limits, generator power output, mechanical torque at the couplings along the shaft train, fuel/air ratios inside of the combustor, compressor pressure ratio, absolute pressure inside of the gas turbine casing, etc.

The control system 10 acts independently of the particular fuel composition.

The gas turbine engine system 1 is effective in ensuring a stable gas turbine cycle and an optimal performance in form of power output and efficiency under varying composition of the fuel from the main source at both base load and high part load operation. The invention therefore provides a higher average power output and/or lower costs associated to the optimum sizing of the single gas turbine components in operations with fuel characterized by non-predictable composition variations over time and in particular in applications with blast furnace gas as main fuel or with other fuels characterized by a low average value of the lower heating value or high and variable amount of H₂ and CO in their composition. When the control according to the present invention is employed, there is no need for such complicated mixing of fuels in order to compensate for changes in the composition and/or energy content of fuel.

The control system 10 can control the gas turbine engine 2 not only under extreme conditions (in this case parameters like pressure, temperature, fuel composition, grid frequency etc. are taken), but also under normal conditions and allows for optimum performance in term of power output and efficiency anytime the fuel composition differs from the original composition used for design conditions.

The tolerance to fuel of different composition and energy content can be considerably increased without detrimental effect on efficiency etc. Using the proposed control scheme even allows the use of fuel compositions, which vary outside the range defined for the design composition for the fuel. The control system 10 will detect it indirectly and automatically, redefines the variable vane 8 setting and no manual redefinition of the variable vane settings.

A protective system may also be implemented, which compares measured pressure and/or temperature values with threshold values, and which initiates a protective action if the difference between threshold and measured values falls outside a predefined control for longer than a predefined delay time. Such a protective system can provide protection against big and abnormal fuel composition variations, which may lead to a damage of the gas turbine. It may be implemented as an element interacting with the fuel control valve or shut-off valve to close it or to bring it to an intermediate position e.g. in a way proportional to the detected error between measured and target pressures or pressure ratios, and/or a fast closing of the compressor variable vanes.

The control system 10 operates in combination with a system for control of the fuel mass flow based on direct or indirect measurement (i.e. calculation based on direct measurement of other parameters measurement). Such control may e.g. be based on the turbine inlet or outlet temperature basically limiting the amount of fuel upon reaching predefined target values in turbine inlet or outlet temperature.

Such combination gives an optimal configuration where simultaneously both cycle pressure and turbine temperatures are controlled with an overall improvement of lifetime. It also has a positive impact on the accuracy of fuel mass flow control loops based on turbine inlet temperature calculation.

The control system 10, though this is not necessary, may additionally receive and take into account regular updated information about fuel composition for fine tuning of the target schedules predefined target pressure or new defined target pressure through a gas chromatograph or any other device for the measurement of the fuel composition. Use of a gas chromatograph or any other device for the measurement of the fuel composition gives even higher accuracy in the control action.

Furnace gas or coke-oven gas or a mixture of the two or any gas with hydrogen content of H2 > 1% mol can be used as fuel in gas turbine engine system 1.

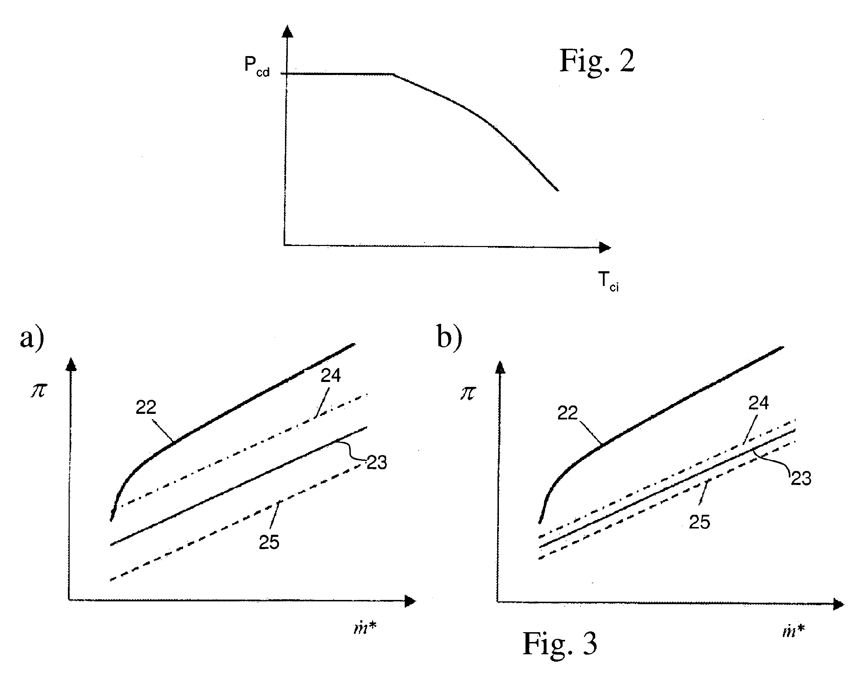

Fig. 2 is a conventional example of a target schedule of compressor discharge pressure versus compressor inlet temperature at constant shaft rotational speed.

Fig. 3 shows the sensitivity of the position of the engine operating line (in the compressor map) with respect to the fuel composition (lower heating value LHV). The vertical axis is the compressor pressure ratio, the horizontal axis is the compressor inlet reduced mass flow, and the parameter is the fuel lower heating value (LHV). The solid straight line indicates the engine operating line for the standard fuel composition for which the general operation scheme is designed. The comparison of the conventional control method (Fig. 3a) with the control method according to the invention of (Fig. 3b) shows that the operating line in case of the control according to the invention is much less if not essentially not dependent anymore on the fuel composition.. In other words the operating line is much less dependent on the fuel composition. Correspondingly, the process according to the invention allows controlling the engine operating line in a more stable position, compensating to a large extent the effects of the fuel composition variation that would tend to increase the operating line in case of fuels with lower LHV, and vice versa for higher LHV. The movement of the engine operating line in case of the standard control leads the compressor to operation in non-optimal conditions, thus reducing its efficiency, potentially coming too close to the surge lines. The invention allows keeping control and avoiding of these issues.

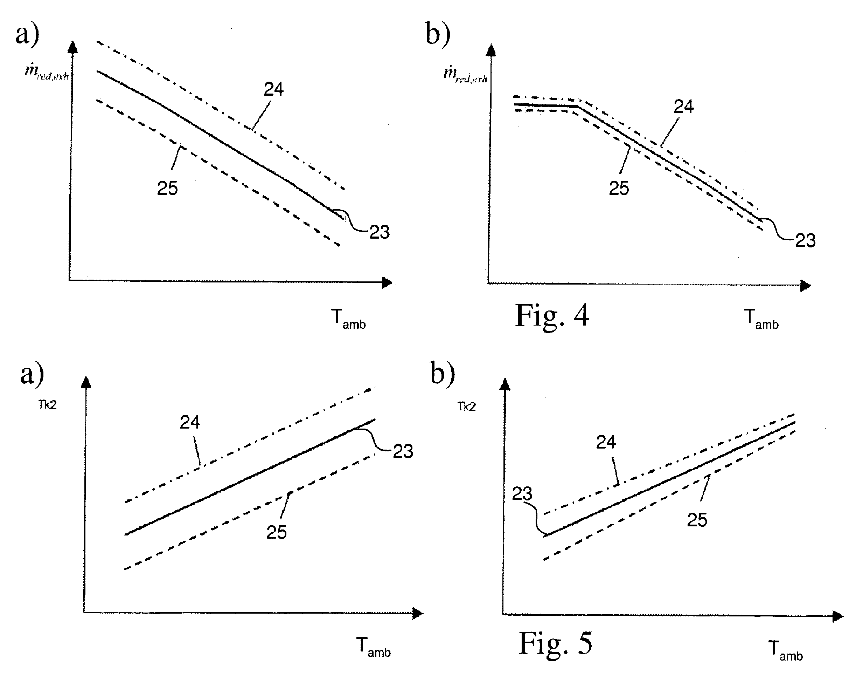

Fig. 4 illustrates the sensitivity of the turbine exhaust reduced mass flow as a function of the fuel composition (lower heating value, LHV). The vertical axis is the turbine exhaust reduced mass flow, the horizontal axis is the compressor inlet temperature (ambient temperature), and the parameter is the fuel lower heating value (LHV). The comparison of the conventional control method (Fig. 4a) with the control method according to the invention of (Fig. 4b) shows again that the invention allows controlling the turbine exhaust reduced mass flow operating line in a more stable position, compensating to a large extent the effects of the fuel composition variation, that would tend to increase the exhaust reduced mass flow in case of fuels with lower LHV, and vice versa for higher LHV. The increase of exhaust reduced mass flow corresponds to an increase of the flow speed in the last turbine stages, which in its turn might lead to aerodynamic instability and excessive load on the blades.

Fig. 5 shows the sensitivity of the compressor discharge temperature as a function of the fuel composition (lower heating value, LHV). The vertical axis is the compressor discharge temperature, the horizontal axis is the compressor inlet temperature (ambient temperature) and the parameter is the fuel lower heating value (LHV). The comparison of the conventional control method (Fig. 5a) with the control method according to the invention of (Fig. 5b) shows again that the invention allows controlling the compressor outlet temperature operating line at a more stable value, especially in case of high ambient temperature, compensating to a large extent the effects of the fuel composition variation that would tend to increase the compressor outlet temperature in case of fuels with lower LHV, and vice versa for higher LHV. The increase of compressor outlet temperature leads to higher temperature for the rotor and turbine cooling air, thus reducing the lifetime of the parts.

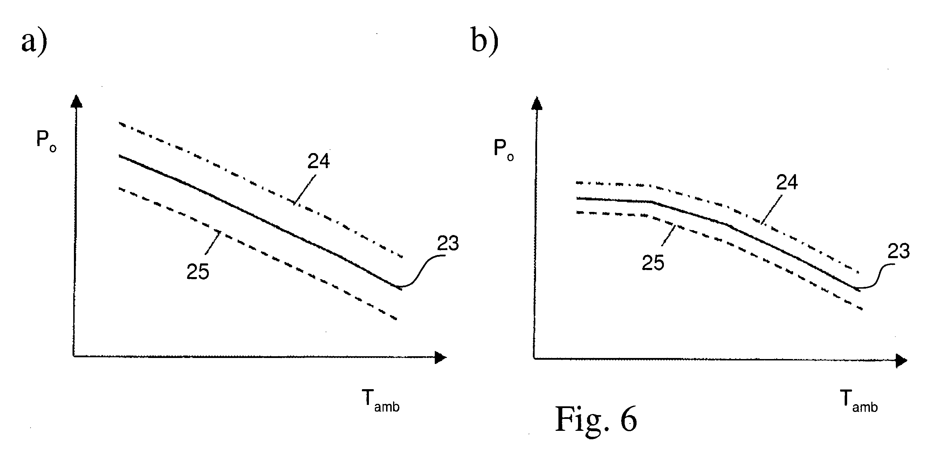

Fig. 6 is an example of sensitivity of the gas turbine engine power output with respect to the fuel composition (lower heating value, LHV). The vertical axis is the gas turbine engine power output, the horizontal axis is the compressor inlet temperature (ambient temperature), and the parameter is the fuel lower heating value (LHV). The comparison of the conventional control method (Fig. 6a) with the control method according to the invention of (Fig. 6b) again shows that the invention allows controlling the power output operating line at a more stable value, especially in case of low ambient temperature, compensating to a large extent the effects of the fuel composition variation that would tend to increase the compressor outlet temperature in case of fuels with lower LHV, and vice versa for higher LHV. The uncontrolled increase of power output might lead to excessive stresses at the couplings, thus reducing the lifetime of the parts.

It is further possible to provide an adjustable/controllable by-pass of the compressor inlet air with respect to the combustor or to one of the combustors is present. The amount of by-pass air is generally determined based on combustion consideration (position of the flame within the combustion chamber, ratio between fuel and air, pressure loss through the burner(s)) or based on turbine cooling considerations. The adjustable/controllable by-pass compensates the variation of by-pass air by increasing or decreasing the amount of compressor inlet air in such a way that the gas turbine cycle and the turbine is maintained at a stable optimal pressure ratio.

### LIST OF REFERENCE SIGNS

| | | | |
|---|---|---|---|
| 1 | gas turbine engine system | 25 | high lower heating fuel line |
| 2 | gas turbine engine | | |
| 3 | electric generator | T_{amb} | temperature of intake air |
| 4 | air intake with intake manifold | T_{ci} | compressor inlet temperature |
| | | P_{amb} | pressure of intake air |
| 5 | compressor | P_{ci} | compressor intake pressure |
| 6 | combustor | P_{cd} | compressor discharge |
| 7 | turbine | | pressure |
| 8 | variable vanes | Po | power |
| 9 | actuator | Tₑₓ | temperature of turbine |
| 10 | control system | | exhaust air |
| 11 | rotor shaft speed measurement device | n | shaft speed |
| | | π | compressor pressure ratio, P_{cd}/P_{ci} |
| 12 | turbine exhaust temperature measurement device | | |
| 13 | pressure measurement device | | |
| 14 | electric power | | |
| 15 | air inlet cooling device | | |
| 16 | shaft | | |
| 17 | measurement device for ambient air temperature / compressor inlet air temperature / temperature inside of the turbine | | |
| 18 | closed loop unit | | |
| 19 | intake air | | |
| 20 | fuel | | |
| 21 | exhaust air | | |
| 22 | surge line | | |
| 23 | design fuel operation line | | |
| 24 | low lower heating fuel line | | |

## Claims

1. Method for operating a gas turbine engine system (1) under baseload and/or high part load conditions, said gas turbine engine system (1) comprising a gas turbine engine (2) with
at least one compressor (5) with at least one row of adjustable variable vanes (8) for control of the inlet air mass flow;
at least one combustor (6);
at least one turbine (7),
wherein a control system (10), on the basis of and as a function of
at least one measured temperature value (T_{amb}) measured upstream of the compressor (5) or a measurable quantity directly functionally related thereto,
controls the position of the variable vanes (8) such that at least one measured pressure value (P_{cd}) varying with the angular position of the variable vanes (8) is at a predefined target pressure which is a function of said first temperature (T_{amb}), wherein said predefined target pressure is a function of a turbine exhaust temperature (Tₑₓ), wherein the turbine exhaust temperature (Tₑₓ) is measured using one or a plurality of measuring points with a corresponding averaging scheme.

2. Method according to claim 1, wherein the control system (10), on the basis of and as a function of the at least one measured temperature value (T_{amb}) measured upstream of the compressor (5) or a measurable quantity directly functionally related thereto, as well as a function of a measured speed of rotation (n) of a shaft of a gas turbine engine (2) or a measurable quantity directly functionally related thereto, controls the position of the variable vanes (8) such that at least one measured pressure value (P_{cd}) varying with the angular position of the variable vanes (8) is at a predefined target pressure which is a function of said first temperature (T_{amb}) as well as said speed of rotation (n).

3. Method according to any of the preceding claims, wherein said control is effected by comparing said measured pressure value (P_{cd}) with the predefined target pressure, wherein the target pressure is calculated as a function of the measured speed of rotation (n) of the shaft or a measurable quantity directly functionally related thereto, and/or as a function of at least one measured temperature value (T_{amb}) measured upstream of the compressor (5) or a measurable quantity directly functionally related thereto, and wherein the control generates a command to an actuator for the movement of the variable vanes (8) to increase the inlet air flow to the compressor (5) by opening the variable vanes (8) in case the measured pressure value (P_{cd}) is less than the predefined target pressure or to decrease the inlet air flow by closing the variable vanes (8) in case the measured pressure value (P_{cd}) is larger than the predefined target pressure.

4. Method according to any of the preceding claims, wherein the measured temperature value (T_{amb}) measured upstream of the compressor (5) or a measurable quantity directly functionally related thereto is a temperature inside of the gas turbine air intake system, preferably the ambient air temperature or the compressor inlet air temperature.

5. Method according to any of the preceding claims, wherein the measured pressure value (P_{cd}) varying with the angular position of the variable vanes (8) is measured inside of the compressor (5) downstream of the first row of variable vanes (8) or downstream of several rows of variable vanes (8) or in a plenum downstream of the compressor or in the combustor upstream of the turbine first blade row or downstream of the turbine.

6. Method according to any of the preceding claims, wherein the control is a closed loop control.

7. Method according to any of the preceding claims, wherein said predefined target pressure is a function of a second pressure value (P_{amb}) measured upstream of the compressor or downstream of the turbine outlet, wherein preferably control takes place by controlling the ratio of the measured pressure value (P_{cd}) with the second pressure value (P_{amb}) to a target pressure ratio.

8. Method according to any of the preceding claims, wherein the control is carried out in combination with a control of the fuel mass flow, the latter preferably being based on direct or indirect measurement of the turbine inlet or outlet temperature, limiting the amount of fuel based on predefined target values of turbine inlet or outlet temperature.

## Patentansprüche

1. Verfahren zum Betreiben eines Gasturbinenmotorsystems (1) unter Grundlast- und/oder hohen Teillastbedingungen, wobei das Gasturbinenmotorsystem (1) Folgendes umfasst
einen Gasturbinenmotor (2) mit mindestens einem Verdichter (5) mit mindestens einer Reihe von einstellbaren variablen Leitschaufeln (8) für die Steuerung des Einlassluftmassenstroms; mindestens einem Verbrenner (6); mindestens einer Turbine (7);
wobei ein Steuersystem (10) auf der Grundlage und in Abhängigkeit von mindestens einem gemessenen Temperaturwert (T_{amb}), der stromaufwärts des Verdichters (5) gemessen wird, oder einer messbaren Menge, die direkt funktionell damit in Zusammenhang steht,
die Position der variablen Leitschaufeln (8) derart steuert, dass mindestens ein gemessener Druckwert (P_{cd}), der mit der Winkelposition der variablen Leitschaufeln (8) variiert, bei einem vordefinierten Zieldruck liegt, der von der ersten Temperatur (T_{amb}) abhängt, wobei der vordefinierte Zieldruck von einer Turbinenauslasstemperatur (Tₑₓ) abhängt, wobei die Turbinenauslasstemperatur (Tₑₓ) unter Verwendung eines oder mehrerer Messpunkte mit einem entsprechenden System zur Mittelwertbildung gemessen wird.

2. Verfahren nach Anspruch 1, wobei das Steuersystem (10) auf der Grundlage von und in Abhängigkeit des mindestens einen Temperaturwerts (T_{amb}), der stromaufwärts des Verdichters (5) gemessen wird, oder einer messbaren Menge, die direkt funktionell damit in Zusammenhang steht, sowie in Abhängigkeit einer gemessenen Drehzahl (n) einer Welle eines Gasturbinenmotors (2) oder einer messbaren Menge, die direkt funktionell damit in Zusammenhang steht, die Position der variablen Leitschaufeln (8) derart steuert, dass mindestens ein gemessener Druckwert (P_{cd}), der mit der Winkelposition der variablen Leitschaufeln (8) variiert, bei einem vordefinierten Zieldruck liegt, der von der ersten Temperatur (T_{amb}) sowie der Drehzahl (n) abhängt.

3. Verfahren nach einem der vorhergehenden Ansprüche, wobei die Steuerung durch Vergleichen des gemessenen Druckwerts (P_{cd}) mit dem vordefinierten Zieldruck erfolgt, wobei der Zieldruck in Abhängigkeit der gemessenen Drehzahl (n) der Welle oder einer messbaren Menge berechnet wird, die direkt funktionell damit in Zusammenhang steht, und/oder in Abhängigkeit mindestens eines gemessenen Temperaturwerts (T_{amb}), der stromaufwärts des Verdichters (5) gemessen wird, oder einer messbaren Menge, die direkt funktionell damit in Zusammenhang steht, und wobei die Steuerung einen Befehl an einen Aktor für die Bewegung der variablen Leitschaufeln (8) ausgibt, um den Einlassluftstrom zum Verdichter (5) durch Öffnen der variablen Leitschaufeln (8) zu erhöhen, falls der gemessene Druckwert (P_{cd}) geringer ist als der vordefinierte Zieldruck, oder um den Einlassluftstrom durch Schließen der variablen Leitschaufeln (8) zu senken, falls der gemessene Druckwert (P_{cd}) größer als der vordefinierte Zieldruck ist.

4. Verfahren nach einem der vorhergehenden Ansprüche, wobei der gemessene Temperaturwert (T_{amb}), der stromaufwärts des Verdichters (5) gemessen wird, oder eine messbare Menge, die direkt funktionell damit in Zusammenhang steht, eine Temperatur im Inneren des Gasturbinen-Luftansaugsystems, vorzugsweise die Umgebungslufttemperatur oder die Verdichtereinlasslufttemperatur ist.

5. Verfahren nach einem der vorhergehenden Ansprüche, wobei der gemessene Druckwert (P_{cd}), der mit der Winkelposition der variablen Leitschaufeln (8) variiert, im Inneren des Verdichters (5) stromabwärts der ersten Reihe von variablen Leitschaufeln (8) oder stromabwärts von mehreren Reihen variabler Leitschaufeln (8) oder in einer Luftkammer stromabwärts des Verdichters oder in dem Verbrenner stromaufwärts der ersten Turbinenschaufelreihe oder stromabwärts der Turbine gemessen wird.

6. Verfahren nach einem der vorhergehenden Ansprüche, wobei die Steuerung eine Steuerung mit geschlossenem Regelkreis ist.

7. Verfahren nach einem der vorhergehenden Ansprüche, wobei der vordefinierte Zieldruck von einem zweiten Druckwert (P_{amb}) abhängt, der stromaufwärts des Verdichters oder stromabwärts des Turbinenauslasses gemessen wird, wobei die Steuerung vorzugsweise durch Steuern des Verhältnisses des gemessenen Druckwerts (P_{cd}) zu dem zweiten Druckwert (P_{amb}) auf ein Zieldruckverhältnis stattfindet.

8. Verfahren nach einem der vorhergehenden Ansprüche, wobei die Steuerung in Kombination mit einer Steuerung des Kraftstoffmassenstroms ausgeführt wird, wobei dieser vorzugsweise auf einer direkten oder indirekten Messung der Turbineneinlass- oder -auslasstemperatur basiert, wobei die Kraftstoffmenge basierend auf vordefinierten Zielwerten der Turbineneinlass- oder - auslasstemperatur begrenzt wird.

## Revendications

1. Procédé de fonctionnement d'un système de turbine à gaz (1) dans des conditions de charge de base et/ou de charge partielle élevée, ledit système de turbine à gaz (1) comprenant
une turbine à gaz (2) avec
au moins un compresseur (5) avec au moins une rangée d'aubes variables ajustables (8) pour la régulation du débit massique d'admission d'air ;
au moins une chambre de combustion (6) ;
au moins une turbine (7),
dans lequel un système de contrôle (10), sur la base et en fonction
d'au moins une valeur de température mesurée (T_{amb}) mesurée en amont du compresseur (5) ou d'une quantité mesurable directement associée fonctionnellement à celle-ci,
contrôle la position des aubes variables (8) de telle sorte qu'au moins une valeur de pression mesurée (P_{cd}) variant avec la position angulaire des aubes variables (8) est à une pression cible prédéfinie qui est une fonction de ladite première température (T_{amb}), ladite pression cible prédéfinie étant une fonction d'une température d'échappement de la turbine (Tₑₓ), la température d'échappement de la turbine (Tₑₓ) étant mesurée en utilisant un ou une pluralité de points de mesure avec un schéma de prise de moyenne correspondant.

2. Procédé selon la revendication 1, dans lequel le système de contrôle (10), sur la base et en fonction de l'au moins une valeur de température mesurée (T_{amb}) mesurée en amont du compresseur (5) ou d'une quantité mesurable directement associée fonctionnellement à celle-ci, ainsi qu'en fonction d'une vitesse de rotation mesurée (n) d'un arbre d'une turbine à gaz (2) ou d'une quantité mesurable directement associée fonctionnellement à celle-ci, contrôle la position des aubes variables (8) de telle sorte qu'au moins une valeur de pression mesurée (P_{cd}) variant avec la position angulaire des aubes variables (8) est à une pression cible prédéfinie qui est une fonction de ladite première température (T_{amb}) ainsi que de ladite vitesse de rotation (n).

3. Procédé selon l'une quelconque des revendications précédentes, dans lequel ledit contrôle est effectué en comparant ladite valeur de pression mesurée (P_{cd}) avec la pression cible prédéfinie, la pression cible étant calculée comme une fonction de la vitesse de rotation mesurée (n) de l'arbre ou d'une quantité mesurable directement associée fonctionnellement à celle-ci, et/ou comme une fonction d'au moins une valeur de température mesurée (T_{amb}) mesurée en amont du compresseur (5) ou d'une quantité mesurable directement associée fonctionnellement à celle-ci, et dans lequel le contrôle génère une commande à un actionneur pour le déplacement des aubes variables (8) afin d'augmenter le débit d'admission d'air au compresseur (5) en ouvrant les aubes variables (8) dans le cas où la valeur de pression mesurée (P_{cd}) est inférieure à la pression cible prédéfinie ou de diminuer le débit d'admission d'air en fermant les aubes variables (8) dans le cas où la valeur de pression mesurée (P_{cd}) est supérieure à la pression cible prédéfinie.

4. Procédé selon l'une quelconque des revendications précédentes, dans lequel la valeur de température mesurée (T_{amb}) mesurée en amont du compresseur (5) ou une quantité mesurable directement associée fonctionnellement à celle-ci est une température à l'intérieur du système d'admission d'air de la turbine à gaz, de préférence la température de l'air ambiant ou la température de l'air à l'entrée du compresseur.

5. Procédé selon l'une quelconque des revendications précédentes, dans lequel la valeur de pression mesurée (P_{cd}) variant avec la position angulaire des aubes variables (8) est mesurée à l'intérieur du compresseur (5) en aval de la première rangée d'aubes variables (8) ou en aval de plusieurs rangées d'aubes variables (8) ou dans un plénum en aval du compresseur ou dans la chambre de combustion en amont de la première rangée d'aubes de la turbine ou en aval de la turbine.

6. Procédé selon l'une quelconque des revendications précédentes, dans lequel le contrôle est un contrôle en boucle fermée.

7. Procédé selon l'une quelconque des revendications précédentes, dans lequel ladite pression cible prédéfinie est une fonction d'une deuxième valeur de pression (P_{amb}) mesurée en amont du compresseur ou en aval de la sortie de la turbine, le contrôle se déroulant de préférence en régulant le rapport entre la valeur de pression mesurée (P_{cd}) et la deuxième valeur de pression (P_{amb}) à un rapport de pression cible.

8. Procédé selon l'une quelconque des revendications précédentes, dans lequel le contrôle est réalisé en combinaison avec une régulation du débit massique de combustible, cette dernière étant de préférence basée sur une mesure directe ou indirecte de la température à l'entrée ou la sortie de la turbine, limitant la quantité de combustible sur la base de valeurs cibles prédéfinies de température à l'entrée ou la sortie de la turbine.
